# EUROPEAN PATENT APPLICATION

(11) **EP 3 207 782 A2**
(43) Date of publication of application: **23.08.2017**
(21) Application number: 17152829.2
(22) Date of filing: 24.01.2017
(51) Int. Cl.: A01B 63/111

(54) **A SYSTEM AND METHOD FOR HITCH CONTROL**

(30) Priority: 18.02.2016 EP 16290037
(71) Applicant: AGCO International GmbH, 8212 Neuhausen am Rheinfall (CH)
(72) Inventor: Boulard, Nicolas, 60026 Beauvais (FR)
(74) Representative: AGCO Intellectual Property Department

(57) **Abstract**

There is described a control method and system which provides for an automatic quick soil system for an agricultural vehicle. The system monitors the output of a hitch draft sensor to determine if a hitch mounted implement comes into contact with the ground surface, and if so, enables a quick soil engagement module to correctly lower the hitch-mounted implement into the ground.

## Description

### Field of the Invention

The present invention relates to a control method and an associated system for a vehicle hitch, in particular for the control of lowering of hitch-mounted implements for agricultural vehicles.

### Background of the Invention

Generally in agricultural tractors, soil cultivation implements such as ploughs, harrows, rotators, etc., are provided mounted to a tractor hitch. The hitch provides for raising and lowering of the implement relative to the ground, such that the implement may be held in a raised position during transportation, and in a lowered position to engage with and act upon the soil.

The correct positioning of a hitch-mounted implement in the ground, and in particular to the correct depth level, can require knowledge of the cultivation operation to be performed, the soil type, current traction conditions, etc. Accordingly, the operator is required to take several factors into consideration when initialising engagement of the implement with the soil.

It is known to provide a quick soil system, wherein a tractor operator can engage a system which lowers a hitch-mounted implement to a desired depth level in the ground. However, the use of such a system may require dedicated operator training to ensure correct usage. In addition, the provision of a separate quick soil control in addition to a hitch height control can lead to operator confusion.

Furthermore, as a quick soil system may be provided in addition to general-purpose height controls for the hitch, some operators continue to rely on manual control of the hitch lowering for cultivation operations. The possible use of alternative engagement methods by different operators can lead to problems of inconsistences of cultivation results between operators.

It is an object of the invention to provide a control method and system for hitch-mounted implements which addresses the above problems, and provides a simpler solution for the use of hitch-mounted implements.

### Summary of the Invention

Accordingly, there is provided an automatic quick soil control method for an agricultural vehicle, the vehicle having a hitch-mounted implement with a connected hitch draft sensor and a quick soil engagement module for rapid engagement of the hitch-mounted implement with the ground, wherein the control method comprises the steps of:
monitoring the output of a hitch draft sensor, to determine if the hitch is in a raised position such that the hitch-mounted implement is free of contact with the ground, or if the hitch is in a lowered position such that the hitch-mounted implement is in contact with the ground, and
activating the quick soil engagement module to lower the hitch-mounted implement into the ground, said step of activating performed when the output of the hitch draft sensor indicates that the position of the hitch-mounted implement transitions from being free of contact with the ground to being in contact with the ground. The quick soil engagement module is arranged to fully lower the implement into the ground within a defined travel distance of the agricultural vehicle.

The output of the hitch draft sensor provides a simple and effective mechanism for determining the initiation of a quick soil engagement module. Accordingly, operating a quick soil system based on the output of a hitch the draft sensor minimises the number of additional components which are required to provide the desired functionality. As a result, the control method may be relatively easily incorporated into existing tractor designs or retrofitted to existing tractors, without the need for extensive redesign, or the inclusion of additional elements such as new sensors, etc.

The lowering of the hitch to bring the hitch-mounted implement into initial contact with the ground may be performed by operator lowering of the vehicle hitch, e.g. using operator-controlled hitch height controls. Once initial contact is achieved, and indicated by the output of the hitch draft sensor, the quick soil module automatically engages without any further input from the vehicle operator, thereby freeing up the operator to concentrate on other tasks.

Preferably, the hitch draft sensor is monitored wherein a negative output indicates a raised hitch free of contact with the ground and a zero or positive output indicates contact of the hitch implement with the ground, and wherein the quick soil engagement module is activated to lower the hitch-mounted implement into the ground when the output of the hitch draft sensor transitions to a zero or a positive value from a negative value. Preferably, the steps of monitoring and activating of the quick soil control method are performed responsive to a user input to enable an automatic quick soil mode.

A vehicle operator may selectively enable the control method, to prevent undesired engagement of the quick soil module, e.g. when not performing soil cultivation operations.

Preferably, the method comprises the steps of:
receiving a travel distance parameter, and
in said step of activating the quick soil engagement module, controlling the lowering rate of the hitch-mounted implement such that the implement is fully lowered into the ground when the agricultural vehicle has travelled a distance corresponding to said travel distance parameter.

By providing an adjustable distance for quick soil engagement, the system can control operation to provide for smooth lowering of the implement into the ground, based on the user requirements.

Preferably, the step of activating the quick soil engagement module acts to lower the hitch-mounted implement to a desired depth level in the ground.

Preferably, said desired depth level is at least partly based on a user-defined depth level.

The depth level for the hitch-mounted implement may be set by the user, such that operation can be adjusted to account for differing operating conditions.

Preferably, the method comprises the step of receiving an implement identifier associated with the hitch-mounted implement, wherein said desired depth level is at least partly based on said received implement identifier.

The control method may be operable to detect which type of implement is being used, or to receive information from an operator as to which type of implement is being used. Accordingly, the operation of the quick soil engagement module may be adjusted based on the type of implement in use.

In a preferred embodiment, the method comprises the step of receiving a user permission level for a user of the control method, wherein the travel distance parameter and/or the desired depth level are adjustable based on the received user permission level.

The method may be configured to allow use of the method by both administrator-users and general-users, wherein the user-defined or adjustable data of the method may be adjusted only by the administrator users. This allows for centralised standardisation of the control method, e.g. in instances of fleet operation, or for different drivers of a single vehicle.

There is also provided a controller for an agricultural vehicle, the controller arranged to implement the steps of the above-described method.

There is further provided an agricultural vehicle, preferably an agricultural tractor, comprising a controller as described above, the vehicle further comprising a hitch-mounted implement with a connected hitch draft sensor and a quick soil engagement module for rapid engagement of the hitch-mounted implement with the ground.

It will be understood that the quick soil engagement module may be provided as a part of the controller.

### Detailed Description of the Invention

Embodiments of the invention will now be described, by way of example only, with reference to the accompanying drawings, in which:
Fig. 1 is an illustration of an agricultural vehicle having a hitch-mounted implement according to an embodiment of the invention;
Fig. 2 is an illustrative schematic of a control system according to the invention; and
Fig. 3 is a process diagram according of a control method according to the invention.

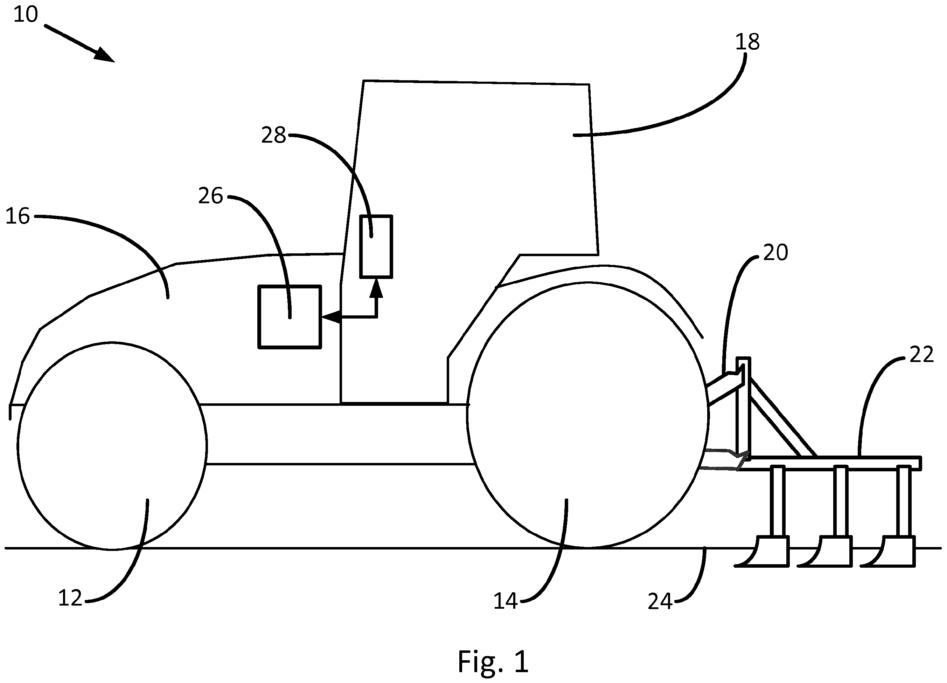

In Fig. 1, a vehicle in the form of an agricultural tractor is indicated at 10. The tractor 10 comprises front wheels 12, rear wheels 14, an engine section 16 and a cab section 18. The tractor 10 further comprises a rear hitch 20 which may be raised or lowered relative to the rest of the tractor 10. An agricultural implement, in this case a plough 22, can be provided mounted to the hitch 20, such that lowering or raising of the hitch 20 brings the hitch-mounted implement 22 into or out of engagement with the ground 24. The tractor 10 further comprises at least one Electronic Control Unit (ECU) 26, which is arranged to control operation of various tractor systems. The cab section 18 is provided with operator controls 28 for control of the different components of the tractor 10, including the direct control of the height of the hitch 20. The operator controls 28 may comprise mechanical levers and/or electronic control systems incorporating configurable switches, touchscreen displays, etc. It will be understood that the ECU 26 is provided in communication with the operator controls 28.

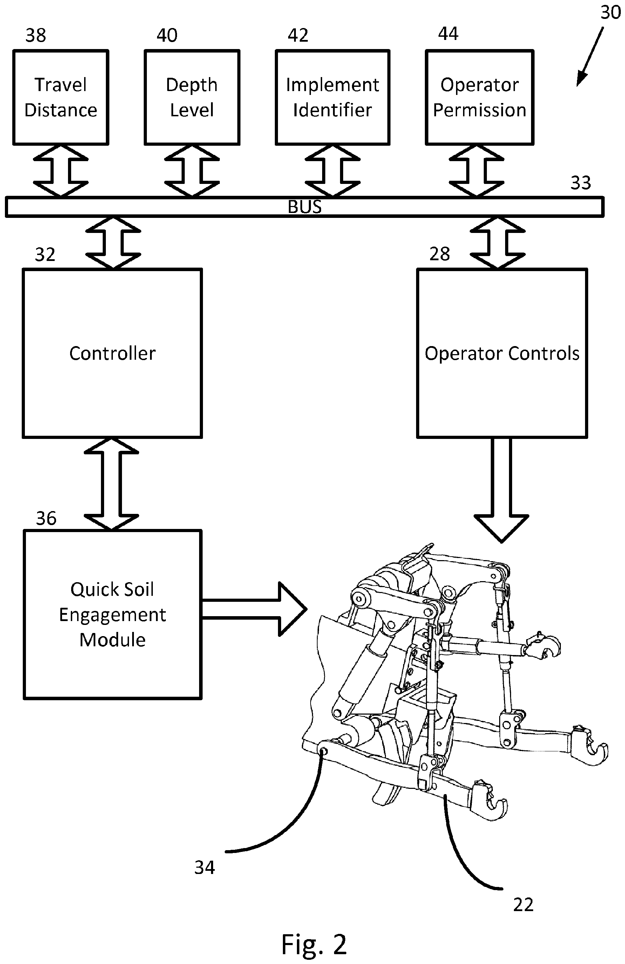

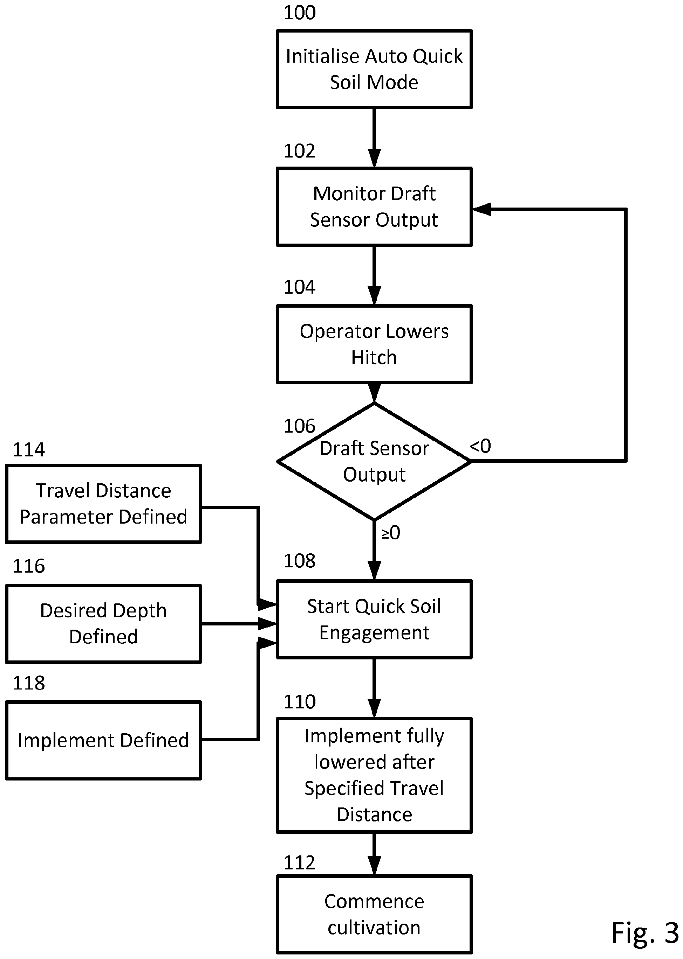

With reference to the schematic illustration of Fig. 2, a control system according to the invention is indicated generally at 30. The control system 30 comprises a central controller 32, which may be provided as part of the ECU 26 or as a separate controller element, e.g. as part of a retrofit solution. The controller 32 is arranged to implement the steps of the control method of the invention, as shown in Fig. 3, to provide for an automatic quick soil system. The controller 32 is coupled with a communication bus 33, which allows for information and commands to be passed between components of the control system 30.

Initially, a vehicle operator initialises the control method by selecting automatic quick soil condition using the appropriate operator controls 28, step 100. Once the control method is initialised, the controller 32 monitors the tractor hitch 20 to determine the hitch status. In particular, the controller 32 is arranged to monitor the output of a draft sensor 34 provided in the hitch 20, step 102, wherein the draft sensor 34 operable to output a measure of the draft forces experienced by the hitch 20 and the attached implement 22. While the embodiment of Fig. 2 positions the draft sensor 34 at a pivot point of a lower link arm of the hitch 22, it will be understood that the draft sensor may be located at any suitable position to provide a reading of the draft force experienced by the tractor hitch 22.

If the draft sensor 34 outputs a negative draft force, this is an indication that the hitch 20 is in a raised position, with the hitch-mounted implement 22 free of the ground 24. Similarly, if the draft sensor 34 outputs a zero or positive draft force, this is an indication that the hitch 20 has been lowered to a position wherein the hitch-mounted implement 22 is in contact with the ground 24.

During use of the system, the vehicle operator can maintain the hitch 20 in a raised position on the tractor 10, to allow for transportation of the tractor 10 and the attached implement 24. As soon as it is desired to initiate cultivation of the ground using the attached implement 22, the vehicle operator acts to lower the hitch 20 using the provided operator controls 28, step 104.

As the hitch-mounted implement 22 contacts the ground 24, accordingly the output of the hitch draft sensor 34 changes from a negative output to a zero or positive output, step 106. Once the controller 32 detects such a transition in the measured draft force, the controller 32 is arranged to initialise an associated quick soil engagement module 36, step 108.

The quick soil engagement module 36 is configured to communicate with actuator devices of the hitch 20, to automatically lower the hitch 20 and the attached implement 22 such that the implement 22 reaches an appropriate work depth in the ground 24 for the implement 22. It will be understood that the quick soil engagement module 36 can be provided as a software routine implemented by the controller 32, or as part of a separate controller.

The quick soil engagement module 36 controls the lowering rate of the hitch 20 such that the hitch-mounted implement 22 is fully lowered to the required work depth in the ground 24 after the tractor 10 has travelled a specified travel distance parameter, step 110. This allows the implement 22 to be gradually lowered into the ground 24 while moving in a forward direction. Once the hitch 20 and the implement 22 have been fully lowered to the required work depth, the tractor 10 and attached implement 22 are positioned for the required cultivation of the ground 24, step 112.

As the control system 30 uses the output of the hitch draft sensor 34 to trigger the engagement of the quick soil module, accordingly the process for the lowering of an implement 22 into the ground 24 is simplified for the operator, who only has to operate the general hitch height controls of the operator input controls 28 to initiate the required soil engagement process of the implement 22. In addition, operating a quick soil system based on the output of a hitch the draft sensor minimises the number of additional components which are required to provide the desired functionality. As a result, the control method may be relatively easily incorporated into existing tractor designs or retrofitted to existing tractors, without the need for extensive redesign, or the inclusion of additional elements such as new sensors, etc.

It will be understood that the control method may be configurable, to provide for additional flexibility of operation.

In one aspect, the operator may be able to set a required travel distance parameter, step 114, in case the operator wants the implement 22 to be lowered fully into the ground 24 over a relatively shorter or longer travel distance for the tractor 10. The operator may be able to define such a travel distance parameter using the operator input controls 28, which can be stored in a suitable memory 38 to be accessed by the controller 32 to adjust the specified travel distance parameter for operation of the quick soil engagement module 36.

In an additional or alternative aspect, the operator may be able to set a desired depth level, step 116, in the event that the operator wants to specify a relatively deeper or shallower working position for the implement 22 in the ground 24. Such a desired depth level may be defined the operator input controls 28, and can be stored in a suitable memory 40 to be accessed by the controller 32. The controller 32 may then accordingly regulate the desired operation of the quick soil engagement module 36, to ensure the desired soil depth level is reached by the hitch 20 and attached implement 22.

In a further aspect, the control system 30 may be operable to receive data defining the particular implement 24 provided on the hitch 22, step 118, which may then determine particular preferred variables of the control system 30, e.g. the preferred or default travel distance and working depth level for a particular implement. For example, the implement may be provided with an RFID tag or other suitable identifier which may be accessed and read by the controller 32, or accessed by an alternative tractor ECU 26 and stored in suitable readable memory 42, which may be retrieved by the controller 32. Additionally, the vehicle operator may be able to define the type of implement 24 provided through use of the operator input controls 28, such data subsequently stored in the appropriate memory 42.

It will be understood that any or all of the variables of the desired travel distance, the desired depth level, and the particular implement used, may provide for appropriate adjustment of the quick soil engagement module.

In a further aspect of the invention, it will be understood different operators of the control system 30 may have different authorisation levels defined for each operator, and that adjustment of the various parameters of the control system 30 may be limited to operators having a particular authorisation level, e.g. a supervisor-level or administrator-user may define the particular travel distance and/or working depth level to be used for a number of different general-users. To this end, each operator may have a unique identifier to be input via the operator input controls 28, e.g. a password, a thumbprint, an encoded machine-readable device such as a USB key. The ECU 26 or the controller 32 may determine the operator authorisation level based on the unique identifier, and provide this data to the operator permission memory 44 of the control system 30. Accordingly, the variables of the control system 30 which may be adjusted by the operator may be limited, based on the determined authorisation or permission level of that particular operator.

The system and method of the invention provides a simpler and more efficient mechanism for tractor operators when using soil cultivation implements. In addition, the system and method of the invention provides for a high degree of flexibility and customisability of vehicle operation, when providing for automatic quick soil engagement of hitch-mounted implements.

The invention is not limited to the embodiments described herein, and may be modified or adapted without departing from the scope of the present invention.

## Claims

1. An automatic quick soil control method for an agricultural vehicle, the vehicle having a hitch-mounted implement with a connected hitch draft sensor and a quick soil engagement module for rapid engagement of the hitch-mounted implement with the ground, wherein the control method comprises the steps of:
monitoring the output of a hitch draft sensor, to determine if the hitch is in a raised position such that the hitch-mounted implement is free of contact with the ground, or if the hitch is in a lowered position such that the hitch-mounted implement is in contact with the ground, and
activating the quick soil engagement module to lower the hitch-mounted implement into the ground, said step of activating performed when the output of the hitch draft sensor indicates that the position of the hitch-mounted implement transitions from being free of contact with the ground to being in contact with the ground,
wherein the quick soil engagement module is arranged to fully lower the implement into the ground within a defined travel distance of the agricultural vehicle.

2. The method of claim 1, such that the hitch draft sensor is monitored wherein a negative output indicates a raised hitch free of contact with the ground and a zero or positive output indicates contact of the hitch implement with the ground, and wherein the quick soil engagement module is activated to lower the hitch-mounted implement into the ground when the output of the hitch draft sensor transitions to a zero or a positive value from a negative value.

3. The method of claim 1 or claim 2, wherein the steps of monitoring and activating of the quick soil control method are performed responsive to a user input to enable an automatic quick soil mode.

4. The method of any one of claims 1-3, wherein the method comprises the steps of:
receiving a travel distance parameter, and
in said step of activating the quick soil engagement module, controlling the lowering rate of the hitch-mounted implement such that the implement is fully lowered into the ground when the agricultural vehicle has travelled a distance corresponding to said travel distance parameter.

5. The method of any preceding claim, wherein the step of activating the quick soil engagement module acts to lower the hitch-mounted implement to a desired depth level in the ground.

6. The method of claim 5, wherein said desired depth level is at least partly based on a user-defined depth level.

7. The method of claim 5 or claim 6, wherein the method comprises the step of receiving an implement identifier associated with the hitch-mounted implement, wherein said desired depth level is at least partly based on said received implement identifier.

8. The method of any one of claims 4-7, wherein the method comprises the step of receiving a user permission level for a user of the control method, wherein the travel distance parameter and/or the desired depth level are adjustable based on the received user permission level.

9. A controller for an agricultural vehicle, the controller arranged to implement the control method as claimed in any one of claims 1-8.

10. An agricultural vehicle, preferably an agricultural tractor, comprising a controller as claimed in claim 9, the vehicle further comprising a hitch-mounted implement with a connected hitch draft sensor and a quick soil engagement module for rapid engagement of the hitch-mounted implement with the ground.
